# EUROPÄISCHE PATENTANMELDUNG

(11) **EP 3 498 668 A1**
(43) Veröffentlichungstag der Anmeldung: **19.06.2019**
(21) Anmeldenummer: 17020570.2
(22) Anmeldetag: 12.12.2017
(51) Int. Cl.: C01B 23/00, B01D 53/22, C10L 3/10

(54) **VERFAHREN UND ANLAGE ZUR GEWINNUNG VON REINHELIUM**

(71) Anmelder: Linde Aktiengesellschaft, 80331 München (DE)
(72) Erfinder: Bauer, Martin, 80804 München (DE); Schiffmann, Patrick, 80339 München (DE)

(57) **Zusammenfassung**

Die vorliegende Erfindung betrifft ein Verfahren (100, 200) zur Gewinnung von Reinhelium unter Verwendung einer ersten Membrantrennstufe (1), einer zweiten Membrantrennstufe (2) und einer dritten Membrantrennstufe (3), wobei der ersten Membrantrennstufe (1) ein erstes heliumhaltiges Einsatzgemisch, der zweiten Membrantrennstufe (2) ein zweites heliumhaltiges Einsatzgemisch und der dritten Membrantrennstufe (3) ein drittes heliumhaltiges Einsatzgemisch zugeführt wird, und wobei in der ersten Membrantrennstufe (1) ein erstes Permeat und ein erstes Retentat, in der zweiten Membrantrennstufe (2) ein zweites Permeat und ein zweites Retentat und in der dritten Membrantrennstufe (3) ein drittes Permeat und ein drittes Retentat gebildet werden. Es ist vorgesehen, dass das erste Einsatzgemisch unter Verwendung zumindest eines Teils eines Helium enthaltenden Ausgangsgemischs gebildet wird, dass das zweite Einsatzgemisch unter Verwendung zumindest eines Teils des ersten Permeats gebildet wird, dass das dritte Einsatzgemisch unter Verwendung zumindest eines Teils des zweiten Permeats gebildet wird, dass das dritte Permeat zumindest teilweise unter Erhalt des Reinheliums und eines Restgemischs durch Druckwechseladsorption bearbeitet wird, und dass zumindest ein Teils des Restgemischs bei der Bildung des zweiten oder des dritten Einsatzgemischs verwendet wird. Eine entsprechende Anlage ist ebenfalls Gegenstand der Erfindung.

## Beschreibung

Die vorliegende Erfindung betrifft ein Verfahren und eine Anlage zur Gewinnung von Reinhelium gemäß den Oberbegriffen der unabhängigen Patentansprüche.

### Stand der Technik

Verfahren und Anlagen zur Gewinnung von Helium, insbesondere aus Erdgas, sind beispielsweise im Artikel "Noble Gases" in Ullmann's Encyclopedia of Industrial Chemistry, Onlineausgabe, 15. März 2001, DOI: 10.1002/14356007.a10_045.pub2, beschrieben. Neben kryogenen Verfahren kommen zur Gewinnung von Helium aus Erdgas auch Membranverfahren zum Einsatz. Auch kombinierte Verfahren können verwendet werden. Zu Details sei beispielsweise auf den Abschnitt 4.2.1.2, "Crude Helium Extraction by Permeation Processes" in dem erwähnten Artikel verwiesen.

Ein entsprechendes Membranverfahren kann insbesondere die Verwendung mehrerer Membrantrennstufen umfassen, wobei in jeder Membrantrennstufe ein an Helium angereichertes Permeat und ein an Helium abgereichertes Retentat gebildet werden. Diese Membrantrennstufen können in unterschiedlicher Weise verschaltet werden.

Beispielsweise offenbart der erwähnte Artikel in Figur 23 ein Verfahren, in dem einer ersten Membrantrennstufe ein Helium enthaltendes Einsatzgemisch zugeführt wird. Ein Permeat der ersten Membrantrennstufe wird verdichtet und einer zweiten Membrantrennstufe zugeführt. Ein Permeat der zweiten Membrantrennstufe stellt das Produkt des Verfahrens dar. Ein Retentat der ersten Membrantrennstufe wird aus dem Verfahren abgeführt. Ein Retentat der zweiten Membrantrennstufe wird vor die erste Membrantrennstufe zurückgeführt und mit dem Einsatzgemisch vereinigt.

Aus der US2014/0243574 A1 ist ein dreistufiges Membranverfahren bekannt, in dem einer ersten Membrantrennstufe ein Helium enthaltendes Einsatzgemisch zugeführt wird. Ein Permeat der ersten Membrantrennstufe wird verdichtet und einer zweiten Membrantrennstufe zugeführt. Ein Permeat der zweiten Membrantrennstufe enthält etwa 30 Molprozent Helium. Es kann weiter zu einem Heliumprodukt aufgereinigt oder bei der Bildung des Einsatzgemischs, das der ersten Membrantrennstufe zugeführt wird, verwendet werden. Es wird hierzu beispielsweise zusammen mit frischem Erdgas in einen Tank eingespeist. Ein Retentat der zweiten Membrantrennstufe wird einer dritten Membrantrennstufe zugeführt. Ein Permeat der dritten Membrantrennstufe wird zusammen mit dem Permeat der ersten Membrantrennstufe verdichtet und zusammen mit diesem der zweiten Membrantrennstufe zugeführt. Retentate der ersten und dritten Membrantrennstufe werden vereinigt und als Erdgasprodukt bereitgestellt.

In sämtlichen Verfahren zur Heliumgewinnung können zur Herstellung von Reinhelium stromab einer kryogenen oder membranbasierten Anreicherung Destillations- oder Druckwechseladsorptionsschritte zum Einsatz kommen. Auf diese Weise können hochreine Heliumprodukte bereitgestellt werden.

Wenngleich die vorliegende Erfindung überwiegend unter Bezugnahme auf die Gewinnung von Helium aus Erdgas beschrieben wird, eignet sie sich grundsätzlich in gleicher Weise für andere Einsatzgebiete, beispielsweise für die Rückgewinnung von Helium aus Helium enthaltenden Gasgemischen, die beispielsweise beim Verdampfen von Helium in kryogenen Anwendungen gebildet werden. Entsprechende Gasgemische werden nachfolgend als "Ausgangsgemische" bezeichnet.

Die vorliegende Erfindung stellt sich die Aufgabe, die Gewinnung von Reinhelium unter Einsatz von Membrantrennstufen aus entsprechenden Ausgangsgemischen zu verbessern und effizienter zu gestalten.

### Offenbarung der Erfindung

Diese Aufgabe wird durch ein Verfahren zur Gewinnung von Reinhelium und eine entsprechende Anlage mit den Merkmalen der unabhängigen Patentansprüche gelöst. Ausgestaltungen der Erfindung sind jeweils Gegenstand der abhängigen Patentansprüche und der nachfolgenden Beschreibung.

Vor der Erläuterung der Vorteile der vorliegenden Erfindung werden nachfolgend einige bei der Beschreibung der Erfindung verwendete Begriffe näher definiert.

Unter einem "Permeat" wird hier ein Gas oder Gasgemisch verstanden, das überwiegend oder ausschließlich Komponenten aufweist, die von einer in einer Membrantrennstufe eingesetzten Membran nicht oder überwiegend nicht zurückgehalten werden, die also die Membran (im Wesentlichen oder zumindest bevorzugt) ungehindert passieren. Entsprechend handelt es sich bei einem "Retentat" um ein Gas oder Gasgemisch, das überwiegend oder ausschließlich Komponenten aufweist, die von der in der Membrantrennstufe eingesetzten Membran vollständig oder zumindest überwiegend zurückgehalten werden.

Gasgemische können im hier verwendeten Sprachgebrauch reich oder arm an einer oder mehreren Komponenten sein, wobei der Begriff "reich" für einen Gehalt von wenigstens 90%, 95%, 99%, 99,9% oder 99,99% und der Begriff "arm" für einen Gehalt von höchstens 10%, 5%, 1%, 0,01% oder 0,01% auf molarer, Gewichts- oder Volumenbasis stehen kann. Gasgemische können im hier verwendeten Sprachgebrauch ferner angereichert oder abgereichert an einer oder mehreren Komponenten sein, wobei sich diese Begriffe auf einen entsprechenden Gehalt in einem anderen Gasgemisch beziehen, unter Verwendung dessen das betrachtete Gasgemisch gebildet wurde. Das betrachtete Gasgemisch ist dabei "angereichert", wenn es zumindest den 2-fachen, 5-fachen, 10-fachen, 100-fachen oder 1.000-fachen Gehalt der bezeichneten Komponente(n) aufweist, und "abgereichert", wenn es höchstens den 0,5-fachen, 0,1 -fachen, 0,01 -fachen oder 0,001 -fachen Gehalt der bezeichneten Komponente(n) aufweist.

Unter "Reinhelium" sei hier insbesondere Helium mit einer Reinheit von mindestens 99,5 (sogenanntes Helium 2.5), 99,9 (Helium 2.9), 99,95 (Helium 3.5), 99,99 (Helium 4.0), 99,995 (Helium 4.5), 99,999 (Helium 5.0), 99,9995 (Helium 5.5), 99,9999 (Helium 6.0) oder 99,99999 Molprozent (Helium 6.0) verstanden.

Ist hier davon die Rede, dass ein Gasgemisch unter Verwendung eines anderen Gasgemischs "gebildet" wird, sei darunter verstanden, dass das betrachtete Gasgemisch zumindest einige der in dem anderen Gasgemisch enthaltene oder diesen gebildete Komponenten aufweist. Ein Bilden eines Gasgemischs aus einem anderen kann beispielsweise ein Abzweigen eines Teils des Gasgemischs, ein Zuspeisen einer oder mehrerer weiterer Komponenten oder Gasgemischs, ein chemisches oder physikalisches Umsetzen zumindest einiger Komponenten, sowie ein Erwärmen, Abkühlen, Verdampfen, Kondensieren usw. umfassen. Ein "Bilden" eines Gasgemischs aus einem anderen Gasgemisch kann aber auch lediglich die Bereitstellung des anderen Gasgemischs oder eines Teils hiervon in geeigneter Form, beispielsweise in einem Behälter oder einer Leitung, umfassen.

Die vorliegende Anmeldung verwendet zur Charakterisierung von Drücken und Temperaturen die Begriffe "Druckniveau" und "Temperaturniveau", wodurch zum Ausdruck gebracht werden soll, dass entsprechende Drücke und Temperaturen in einer entsprechenden Anlage nicht in Form exakter Druck- bzw. Temperaturwerte verwendet werden müssen. Jedoch bewegen sich derartige Drücke und Temperaturen typischerweise in bestimmten Bereichen, die beispielsweise ± 1%, 5%, 10%, 20% oder 25% um einen Mittelwert liegen. Entsprechende Druckniveaus und Temperaturniveaus können in disjunkten Bereichen liegen oder in Bereichen, die einander überlappen. Dasselbe Druckniveau kann beispielsweise auch noch vorliegen, wenn es zu unvermeidlichen Druckverlusten kommt. Entsprechendes gilt für Temperaturniveaus. Bei den hier in bar angegebenen Druckniveaus handelt es sich um Absolutdrücke.

Die vorliegende Erfindung schlägt ein mehrstufiges Membrantrennverfahren vor, bei dem eine erste, eine zweite und eine dritte Membrantrennstufe eingesetzt werden, in denen jeweils ein Permeat und ein Retentat gebildet werden. Das Permeat der ersten Membrantrennstufe wird nachfolgend als "erstes" Permeat, das Permeat der zweiten Membrantrennstufe als "zweites" Permeat und das Permeat der dritten Membrantrennstufe als "drittes" Permeat bezeichnet. Entsprechend wird das Retentat der ersten Membrantrennstufe als "erstes" Retentat, das Retentat der zweiten Membrantrennstufe als "zweites" Retentat und das Retentat der dritten Membrantrennstufe als "drittes" Retentat bezeichnet.

Den Membrantrennstufen werden jeweils Gasgemische zugeführt. Ein der ersten Membrantrennstufe zugeführtes Gasgemisch wird hier als "erstes" Einsatzgemisch, ein der zweiten Membrantrennstufe zugeführtes Gasgemisch als "zweites" Einsatzgemisch und ein der dritten Membrantrennstufe zugeführtes Gasgemisch als "drittes" Einsatzgemisch bezeichnet. Die Einsatzgemische enthalten im Rahmen der vorliegenden Erfindung jeweils Helium in von dem ersten zu dem dritten Einsatzgemisch ansteigender Konzentration. Die Permeate sind dabei gegenüber den entsprechenden Einsatzgemischen jeweils an Helium angereichert, die Retentate gegenüber den entsprechenden Einsatzgemischen jeweils an Helium abgereichert.

Im Rahmen der vorliegenden Erfindung ist vorgesehen, dass das erste Einsatzgemisch unter Verwendung zumindest eines Teils eines Helium enthaltenden Ausgangsgemischs, also beispielsweise unter Verwendung von Erdgas, gebildet wird, wobei bei der Bildung des ersten Einsatzgemischs auch weitere Verfahrensschritte beteiligt sein können, wie nachfolgend noch ausführlicher erläutert. Ferner sieht die vorliegende Erfindung vor, dass das zweite Einsatzgemisch unter Verwendung zumindest eines Teils des ersten Permeats gebildet wird, und dass das dritte Einsatzgemisch unter Verwendung zumindest eines Teils des zweiten Permeats gebildet wird. Mit anderen Worten umfasst die vorliegende Erfindung also eine immer weitere Anreicherung entsprechender an Helium angereicherter Permeate unter Verbleib jeweiliger Retentate.

Die vorliegende Erfindung umfasst, dass das dritte Permeat zumindest teilweise unter Erhalt des Reinheliums und eines Restgemischs durch Druckwechseladsorption bearbeitet wird, und dass zumindest ein Teil des Restgemischs bei der Bildung des zweiten oder des dritten Einsatzgemischs verwendet wird. Ein entsprechendes Restgemisch wird auch als "Tailgas" bezeichnet. Es umfasst insbesondere die in der Druckwechseladsorption während eines Adsorptionstaktes adsorbierten Komponenten, sowie einen Teil der am Ende des Adsorptionstaktes nicht adsorbierten Komponenten in den Zwischenräumen des Adsorbens. Darunter befindet sich auch nicht adsorbiertes Helium. Dieser wesentliche Aspekt der vorliegenden Erfindung ermöglicht einen besonders effizienten Betrieb der jeweils zusätzlich mit dem Restgemisch beaufschlagten Membrantrennstufe(n), da auf diese Weise eine Erhöhung der Konzentration an Helium in den jeweiligen Einsatzgemischen bewirkt werden kann.

In der Druckwechseladsorption, die im Rahmen der vorliegenden Erfindung unter Verwendung eines oder mehrerer Druckwechseladsorptionsschritte durchgeführt werden kann, kann prinzipbedingt nicht gleichzeitig Reinhelium als Produkt einerseits und ein vollständig von Helium befreites Restgemisch andererseits gebildet werden. Das Restgemisch enthält vielmehr noch beträchtliche Mengen Helium. Die Heliumkonzentration in dem Restgemisch liegt typischerweise oberhalb jener des ersten und des zweiten Permeats, die zur Bildung des zweiten bzw. dritten Einsatzgemischs verwendet werden.

In den vorliegend betrachteten mehrstufigen Membranverfahren können grundsätzlich sogenannte "Ausbeutestufen" und "Aufreinigungsstufen" eingesetzt werden. Zweck der Ausbeutestufen ist es dabei, einen möglichst großen Anteil von Helium aus den jeweiligen Einsatzgemischen in die entsprechenden Permeate zu überführen und möglichst wenig Helium über die Retentate zu verlieren. Hierbei lässt sich allerdings typischerweise nicht vermeiden, dass auch andere in den Einsatzgemischen enthaltene Komponenten in die Permeate übergehen. Die Permeate müssen daher zur Gewinnung von Reinhelium weiterbearbeitet werden, nämlich beispielsweise in den Aufreinigungsstufen und/oder, wie im Rahmen der vorliegenden Erfindung, in einer Druckwechseladsorption. In einer Aufreinigungsstufe soll hingegen eine möglichst hohe Heliumkonzentration in den jeweils gewonnenen Permeaten erzielt werden. Hierbei lässt sich allerdings typischerweise nicht vermeiden, dass ein erheblicher Teil des Heliums in den jeweiligen Retentaten verbleibt. In diesem Fall werden vorteilhafterweise die Retentate zurückgeführt, bzw. in einer zusätzlichen Ausbeutestufe behandelt, um dieses Helium zu nutzen.

Die vorliegende Erfindung sieht nun vorteilhafterweise vor, zumindest zwei der drei Membrantrennstufen, nämlich zumindest die erste und die zweite Membrantrennstufe, als Ausbeutestufen auszugestalten. Mit anderen Worten ist im Rahmen der vorliegenden Erfindung vorteilhafterweise vorgesehen, dass zumindest 80% des in dem ersten Einsatzgemisch enthaltenen Heliums in das erste Permeat und zumindest 80% des in dem zweiten Einsatzgemisch enthaltenen Heliums in das zweite Permeat überführt werden. Auch die dritte Membrantrennstufe kann als Ausbeutestufe ausgestaltet sein, so dass zumindest 80% des in dem dritten Einsatzgemisch enthaltenen Heliums in das dritte Permeat überführt werden. Unabhängig voneinander können auch jeweils größere Anteile des jeweils in den Einsatzgemischen enthaltenen Heliums in die Permeate überführt werden, beispielsweise wenigstens 90%, 95% oder 99%. Auf diese Weise sind die Retentate jeweils arm an oder im Wesentlichen frei von Helium und brauchen daher keiner weiteren Bearbeitung zugeführt werden, um in diesen enthaltenes Helium zurückzugewinnen. Die jeweils zu bearbeitenden, "im Kreis geführten" Fluidvolumina verringern sich damit im Gegensatz zu Verfahren, in denen auch Aufreinigungsstufen in Form von Membrantrennstufen realisiert sind. Im Rahmen der vorliegenden Erfindung durchläuft der überwiegende Anteil der bearbeiteten Gasgemische das gesamte Verfahren nur einmal. Eine Ausnahme bildet das in der Druckwechseladsorption erhaltene Restgemisch, das jedoch volumenmäßig in deutlich geringerem Umfang anfällt.

Vorteilhafterweise weist das dritte Permeat, das zumindest teilweise unter Erhalt des Reinheliums und des Restgemischs durch die Druckwechseladsorption bearbeitet wird, einen Gehalt von 20 bis 80 Molprozent, insbesondere von 35 bis 65 Molprozent, Helium auf. Auf diese Weise lässt sich die Druckwechseladsorption im Rahmen der vorliegenden Erfindung besonders effizient durchführen.

Um die besonderen Vorteile der vorliegenden Erfindung zu erzielen, weist das Restgemisch aus der Druckwechseladsorption vorteilhafterweise einen Gehalt von 10 bis 70 Molprozent, insbesondere von 20 bis 50 Molprozent, Helium auf.

Vorteilhafterweise wird das erfindungsgemäße Verfahren derart durchgeführt, dass das erste, das zweite und das dritte Einsatzgemisch jeweils frei von Anteilen des ersten und des zweiten Retentats sind. Mit anderen Worten werden entsprechende Retentate vorteilhafterweise nicht vor die erste, die zweite oder die dritte Membrantrennstufe zurückgeführt, sondern insbesondere aus dem Verfahren ausgeschleust. Sie können beispielsweise als Erdgasprodukte, die arm an oder frei von Helium sind, bereitgestellt werden. Ein entsprechendes Vorgehen kann insbesondere durch die oben erwähnte und näher erläuterte Ausgestaltung der Membrantrennstufen als Ausbeutestufen erfolgen. Ist auch die dritte Membrantrennstufe als Ausbeutestufe ausgebildet, kann auch insbesondere vorgesehen sein, dass das erste, das zweite und das dritte Einsatzgemisch auch jeweils frei von Anteilen des dritten Retentats sind. Eine weitere Bearbeitung entsprechender Retentate erübrigt sich auf diese Weise, so dass ein entsprechendes Verfahren einfacher und kostengünstiger realisiert werden kann.

Im Rahmen der vorliegenden Erfindung kann das Bilden des ersten Einsatzgemischs unter Verwendung zumindest eines Teils des Ausgangsgemischs insbesondere ein Erwärmen umfassen. Dies gilt insbesondere dann, wenn das Einsatzgemisch beispielsweise durch ein kryogenes Verfahren aus dem Ausgangsgemisch oder einem Teil hiervon gebildet wird. Das Ausgangsgemisch oder ein hieraus abgetrennter Teil wird hierbei insbesondere auf eine Temperatur erwärmt, auf der die erste Membrantrennstufe betrieben werden kann. Ein entsprechendes Temperaturniveau kann beispielsweise 0 bis 120 °C, insbesondere 30 bis 90 °C, betragen.

Das Bilden des ersten Einsatzgemischs unter Verwendung zumindest eines Teils des Ausgangsgemischs kann insbesondere auch eine Voranreicherung umfassen. Beispielsweise kann im Rahmen der vorliegenden Erfindung eingesetztes Erdgas durch einen Kondensationsschritt an Kohlenwasserstoffen abgereichert werden. Insbesondere Methan, Wasserstoff und das im Rahmen der vorliegenden Erfindung zu gewinnende Helium verbleiben in diesem Fall in der Gasphase. Insbesondere in einem derartigen Fall bietet sich eine anschließende Erwärmung vor der ersten Membrantrennstufe an. Entsprechende Voranreicherungsschritte können anstelle oder zusätzlich zu einem Kondensationsprozess auch Adsorptionsprozesse umfassen.

Insbesondere kann das Bilden des ersten Einsatzgemischs unter Verwendung zumindest eines Teils des Ausgangsgemischs im Rahmen der vorliegenden Erfindung eine Verdichtung umfassen. Mittels dieser kann das Ausgangsgemisch oder ein Teil hiervon auf einen Eintrittsdruck gebracht werden, auf dem das erste Einsatzgemisch der ersten Membrantrennstufe zugeführt wird. Ein derartiges Druckniveau kann beispielsweise bei 10 bis 120 bar, insbesondere bei 30 bis 100 bar, liegen.

Das Bilden des ersten Einsatzgemischs unter Verwendung zumindest eines Teils des Ausgangsgemischs kann ferner eine beliebige Aufreinigung oder Konditionierung des Ausgangsgemischs oder eines Teils hiervon umfassen. Insbesondere kann hierbei eine Entfernung von Wasser oder anderen Spurenkomponenten vorgesehen sein. Für derartige Aufreinigungsschritte können grundsätzlich bekannte Verfahren bzw. Vorrichtungen eingesetzt werden. Beispielsweise kann auf diese Weise eine negative Veränderung der Membrantrenneigenschaften verhindert bzw. eine längere Standzeit der Membranen erzielt werden.

Im Rahmen der vorliegenden Erfindung umfasst das Bilden des zweiten Einsatzgemischs unter Verwendung zumindest eines Teils des ersten Permeats und/oder des dritten Einsatzgemischs unter Verwendung zumindest eines Teils des zweiten Permeats vorteilhafterweise eine Verdichtung. Eine derartige Verdichtung bringt das erste Permeat bzw. das zweite Permeat auf den Druck, auf dem die zweite Membrantrennstufe bzw. die dritte Membranstufe eintrittsseitig betrieben werden. Eine derartige Verdichtung kann im Rahmen der vorliegenden Erfindung insbesondere unter Verwendung vergleichsweise kleiner Verdichter erfolgen, da, wie erwähnt, im Rahmen der vorliegenden Erfindung lediglich die Permeate der Membrantrennstufen und ggf. das Restgemisch aus der Druckwechseladsorption den jeweils nachgeordneten Membrantrennstufen zugeführt werden. Im Gegensatz zu Verfahren bei denen auch Retentate aus entsprechenden Membrantrennstufen stromabwärtigen Membrantrennstufen zugeführt werden, müssen daher geringere Gasvolumina bearbeitet werden.

Wie bereits erwähnt, umfasst die vorliegende Erfindung insbesondere, dass zumindest ein Teil der eingesetzten Membrantrennstufen als Ausbeutestufen ausgebildet sind. Wie ebenfalls erwähnt, gelangen aus diesem Grund nicht nur Helium sondern auch andere Komponenten in die entsprechenden Permeate. Bei entsprechenden Komponenten kann es sich insbesondere auch um Kohlendioxid handeln, wenn solches Kohlendioxid in dem Ausgangsgemisch enthalten ist und zuvor nicht abgetrennt wird. Daher sieht die vorliegende Erfindung insbesondere bei dem Bilden des dritten Einsatzgemischs unter Verwendung zumindest eines Teils des zweiten Permeats eine Kohlendioxidentfernung aus dem zweiten Permeat vor. Eine entsprechende Kohlendioxidentfernung kann insbesondere unter Verwendung von adsorptiven Trennschritten bzw. Aufreinigungsschritten durchgeführt werden, wie sie grundsätzlich aus dem Stand der Technik bekannt sind. Durch eine Kohlendioxidentfernung kann verhindert werden, dass Kohlendioxid in das dritte Permeat bzw. Retentat übergeht und hier nachteilige Wirkungen entfaltet.

Eine besonders vorteilhafte Ausgestaltung der vorliegenden Erfindung umfasst, das dritte Permeat einer Wasserstoffabreicherung zu unterwerfen, bevor es zumindest zum Teil der Druckwechseladsorption zugeführt wird. Wasserstoff gelangt insbesondere zusammen mit Helium in das dritte Permeat und letztlich in das Reinhelium, wenn es in dem Ausgangsgemisch enthalten ist und nicht durch geeignete Mittel stromauf entfernt wird. Eine Wasserstoffabreicherung bzw. eine Entfernung von Wasserstoff kann insbesondere katalytisch erfolgen, wobei insbesondere Wasser gebildet wird, das einfach durch Kondensation und/oder adsorptiv entfernt werden kann.

Wie bereits mehrfach erläutert, kann die vorliegende Erfindung insbesondere umfassen, als Ausgangsgemisch Erdgas zu verwenden, sie eignet sich jedoch, wie auch erwähnt, grundsätzlich auch für andere Ausgangsgemische wie beispielsweise für Gasgemische, die durch die Verdampfung von flüssigem Helium gebildet werden.

Das im Rahmen der vorliegenden Erfindung gebildete Reinhelium weist insbesondere einen Gehalt von wenigstens 99,5% Molprozent auf. Zur weiteren möglichen Gehalten sei auf die oben getroffene Definition bezüglich "Reinhelium" ausdrücklich verwiesen.

Die vorliegende Erfindung erstreckt sich auch auf eine Anlage zur Gewinnung von Reinhelium mit einer ersten Membrantrennstufe, einer zweiten Membrantrennstufe und einer dritten Membrantrennstufe, wobei Mittel vorgesehen sind, die dafür eingerichtet sind, der ersten Membrantrennstufe ein erstes heliumhaltiges Einsatzgemisch, der zweiten Membrantrennstufe ein zweites heliumhaltiges Einsatzgemisch und der dritten Membranstufe ein drittes heliumhaltiges Einsatzgemisch zuzuführen. Die erste Membrantrennstufe ist dafür eingerichtet, ein erstes Permeat und ein erstes Retentat zu bilden. Die zweite Membrantrennstufe ist dafür eingerichtet, ein zweites Permeat und ein zweites Retentat zu bilden. Die dritte Membranstufe ist dafür eingerichtet, ein drittes Permeat und ein drittes Retentat zu bilden. Erfindungsgemäß sind Mittel vorgesehen, die dafür eingerichtet sind, das erste Einsatzgemisch unter Verwendung zumindest eines Teils eines Helium enthaltenden Ausgangsgemischs zu bilden, das zweite Einsatzgemisch unter Verwendung zumindest eines Teil des ersten Permeats zu bilden, das dritte Einsatzgemisch unter Verwendung zumindest eines Teils des zweiten Permeats zu bilden, das dritte Permeat zumindest teilweise unter Erhalt des Reinheliums und eines Restgemischs durch Druckwechseladsorption zu bearbeiten, um zumindest einen Teil des Restgemisch bei der Bildung des zweiten oder des dritten Einsatzgemischs zu verwenden.

Bezüglich Merkmalen und Vorteilen einer entsprechenden Anlage, die vorteilhafterweise Mittel aufweist, die sie zur Durchführung eines Verfahrens in den zuvor erläuterten Ausgestaltungen befähigen, sei auf die obigen Ausführungen ausdrücklich verwiesen.

In dem erfindungsgemäß vorgeschlagenen Verfahren und der erfindungsgemäß vorgeschlagenen Anlagen in den oben erläuterten Ausgestaltungen können in den Membranen insbesondere glasartige Polymermembranen eingesetzt werden, die eine Selektivität von Helium gegenüber Methan von mindestens 120 bzw. von Helium gegenüber Stickstoff von mindestens 80 aufweisen.

Ausführungsformen der Erfindung werden nachfolgend unter Bezugnahme auf die beigefügten Zeichnungen näher erläutert.

Kurze Beschreibung der Zeichnungen
Figur 1 zeigt ein Verfahren gemäß einer Ausführungsform der Erfindung in Form eines schematischen Prozessflussdiagramms.
Figur 2 zeigt ein Verfahren gemäß einer Ausführungsform der Erfindung in Form eines schematischen Prozessflussdiagramms.

### Ausführliche Beschreibung der Zeichnungen

In den Figuren tragen einander funktional oder baulich entsprechende Elemente einander entsprechende Bezugszeichen und werden der Übersichtlichkeit halber nicht wiederholt erläutert. Die nachfolgenden Erläuterungen betreffen dabei Verfahren und entsprechende Anlagen in gleicher Weise. Es versteht sich, dass entsprechende Anlagen bzw. Verfahren in der Praxis auch optionale oder obligatorische weitere Komponenten bzw. Verfahrensschritte umfassen können. Diese sind in den nachfolgenden Figuren lediglich der Übersichtlichkeit halber nicht dargestellt.

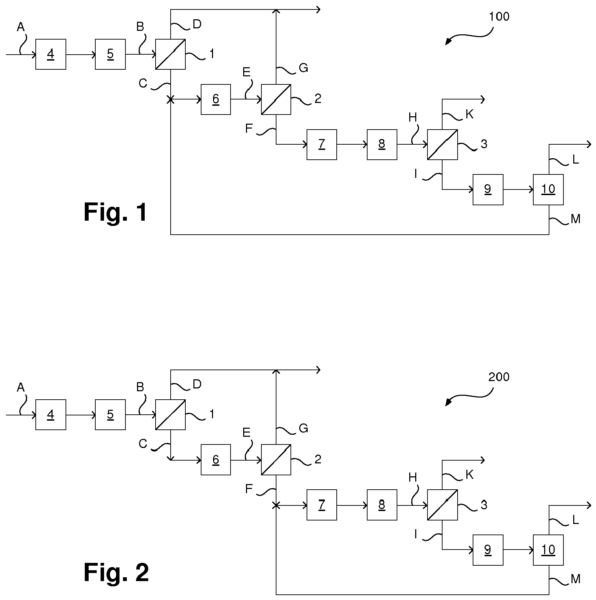

In Figur 1 ist ein Verfahren gemäß einer Ausführungsform der Erfindung in Form eines schematischen Prozessflussdiagramms veranschaulicht und insgesamt mit 100 bezeichnet. In dem Verfahren 100 werden eine erste Membrantrennstufe 1, eine zweite Membrantrennstufe 2 und eine dritte Membrantrennstufe 3 eingesetzt.

Dem Verfahren wird ein Helium enthaltendes Ausgangsgemisch A zugeführt. Unter Verwendung zumindest eines Teils dieses Heliums enthaltenden Ausgangsgemischs A, beispielsweise von Erdgas, wird mittels beliebiger optionaler Bearbeitungsschritte 4 und unter Temperaturveränderung 5 ein erstes Einsatzgemisch B gebildet, welches der ersten Membrantrennstufe 1 zugeführt wird. Wie bereits zuvor erläutert, kann das erste Einsatzgemisch B jedoch grundsätzlich auch dem Ausgangsgemisch A gleichen, d.h. dieses wird teilweise oder vollständig in unveränderter Form der ersten Membrantrennstufe 1 zugeführt.

In der ersten Membrantrennstufe 1 werden ein erstes Permeat C und ein erstes Retentat D gebildet. Unter Verwendung des ersten Permeats C wird unter Verdichtung 6 ein zweites Einsatzgemisch E gebildet und der zweiten Membrantrennstufe 2 zugeführt. Das erste Retentat D wird hingegen aus dem Verfahren 100 ausgeschleust.

In der zweiten Membrantrennstufe 2 werden ein zweites Permeat F und ein zweites Retentat G gebildet. Unter Verwendung des zweiten Permeats F wird unter Verdichtung 7 und Kohlendioxidentfernung 8 ein drittes Einsatzgemisch H gebildet und der dritten Membrantrennstufe 3 zugeführt. Wie das erste Retentat D wird auch das zweite Retentat G aus dem Verfahren 100 ausgeführt. Die Retentate D und G werden dabei im dargestellten Beispiel vereinigt.

In der dritten Membrantrennstufe 3 werden ein drittes Permeat I und ein drittes Retentat K gebildet, wobei das dritte Permeat I einer Wasserstoffentfernung 9 unterworfen und anschließend einer Druckwechseladsorption 10 zugeführt wird. Das dritte Retentat K kann ebenfalls aus dem Verfahren 100 ausgeschleust oder auf beliebige Weise zurückgeführt werden. Insbesondere kann das dritte Retentat K mit dem ersten Retentat D und/oder dem zweiten Retentat G vereinigt werden.

In der Druckwechseladsorption 10 werden Reinhelium L und ein Restgemisch M gebildet. Das Reinhelium L kann als Produkt aus dem Verfahren ausgeschleust werden. Das Restgemisch M wird in der dargestellten Ausführungsform der vorliegenden Erfindung stromaufwärts der zweiten Membrantrennstufe 2 bzw. der Verdichtung 6 zurückgeführt und dabei insbesondere mit dem ersten Permeat C vereinigt.

In Figur 2 ist ein Verfahren gemäß einer weiteren Ausführungsform der vorliegenden Erfindung in Form eines schematischen Prozessflussdiagramms veranschaulicht und insgesamt mit 200 bezeichnet.

Das in Figur 2 veranschaulichte Verfahren 200 unterscheidet sich von dem in Figur 1 veranschaulichten Verfahren 100 im Wesentlichen dadurch, dass das Restgemisch M nicht stromaufwärts der zweiten Membrantrennstufe 2 sondern stromaufwärts der dritten Membrantrennstufe 3 und dabei der Verdichtung 7 und der Kohlendioxidentfernung 8 zugeführt wird.

Ein entsprechendes Restgemisch M kann jedoch auch an beide in dem Verfahren 100 bzw. 200 veranschaulichte Positionen zurückgeführt werden. Hierbei kann insbesondere eine anteilige Rückführung an beide Positionen erfolgen.

## Patentansprüche

1. Verfahren (100, 200) zur Gewinnung von Reinhelium unter Verwendung einer ersten Membrantrennstufe (1), einer zweiten Membrantrennstufe (2) und einer dritten Membrantrennstufe (3), wobei der ersten Membrantrennstufe (1) ein erstes heliumhaltiges Einsatzgemisch, der zweiten Membrantrennstufe (2) ein zweites heliumhaltiges Einsatzgemisch und der dritten Membrantrennstufe (3) ein drittes heliumhaltiges Einsatzgemisch zugeführt wird, und wobei in der ersten Membrantrennstufe (1) ein erstes Permeat und ein erstes Retentat, in der zweiten Membrantrennstufe (2) ein zweites Permeat und ein zweites Retentat und in der dritten Membrantrennstufe (3) ein drittes Permeat und ein drittes Retentat gebildet werden, **dadurch gekennzeichnet, dass** das erste Einsatzgemisch unter Verwendung zumindest eines Teils eines Helium enthaltenden Ausgangsgemischs gebildet wird, dass das zweite Einsatzgemisch unter Verwendung zumindest eines Teils des ersten Permeats gebildet wird, dass das dritte Einsatzgemisch unter Verwendung zumindest eines Teils des zweiten Permeats gebildet wird, dass das dritte Permeat zumindest teilweise unter Erhalt des Reinheliums und eines Restgemischs durch Druckwechseladsorption (10) bearbeitet wird, und dass zumindest ein Teils des Restgemischs bei der Bildung des zweiten oder des dritten Einsatzgemischs verwendet wird.

2. Verfahren (100, 200) nach Anspruch 1, bei dem zumindest 80% des in dem ersten Einsatzgemisch enthaltenen Heliums in das erste Permeat überführt werden und bei dem zumindest 80% des in dem zweiten Einsatzgemisch enthaltenen Heliums in das zweite Permeat, überführt werden.

3. Verfahren (100, 200) nach Anspruch 1 oder 2, bei dem das dritte Permeat einen Gehalt von 20 bis 80 Molprozent Helium aufweist.

4. Verfahren (100, 200) nach einem der vorstehenden Ansprüche, bei dem das Restgemisch einen Gehalt von 10 bis 70 Helium aufweist.

5. Verfahren (100, 200) nach einem der vorstehenden Ansprüche, bei dem das Bilden des ersten Einsatzgemischs unter Verwendung zumindest eines Teils des Ausgangsgemischs ein Erwärmen umfasst.

6. Verfahren (100, 200) nach einem der vorstehenden Ansprüche, bei dem das Bilden des ersten Einsatzgemischs unter Verwendung zumindest eines Teils des Ausgangsgemischs eine Voranreicherung umfasst.

7. Verfahren (100, 200) nach einem der vorstehenden Ansprüche, bei dem das Bilden des zweiten Einsatzgemischs unter Verwendung zumindest eines Teils des ersten Permeats und/oder des dritten Einsatzgemischs unter Verwendung zumindest eines Teils des zweiten Permeats eine Verdichtung umfasst.

8. Verfahren (100, 200) nach einem der vorstehenden Ansprüche, bei dem das Bilden des dritten Einsatzgemischs unter Verwendung zumindest eines Teils des zweiten Permeats und/oder das Bilden des zweiten Einsatzgemischs unter Verwendung zumindest eines Teils des ersten Permeats eine Kohlendioxidentfernung umfasst.

9. Verfahren (100, 200) nach einem der vorstehenden Ansprüche, bei dem das dritte Permeat einer Wasserstoffabreicherung unterworfen wird, bevor es zumindest zum Teil der Druckwechseladsorption unterworfen wird.

10. Verfahren (100, 200) nach einem der vorstehenden Ansprüche, bei dem als Ausgangsgemisch Erdgas verwendet wird.

11. Verfahren (100, 200) nach einem der vorstehenden Ansprüche, bei dem das Reinhelium einen Gehalt von wenigstens 99,5 Molprozent aufweist.

12. Verfahren (100, 200) nach einem der vorstehenden Ansprüche, bei dem das erste, das zweite und das dritte Einsatzgemisch jeweils frei von Anteilen des ersten und des zweiten Retentats sind.

13. Verfahren (100, 200) nach einem der vorstehenden Ansprüche, bei dem das Bilden des ersten Einsatzgemischs unter Verwendung zumindest eines Teils des Ausgangsgemischs eine Verdichtung umfasst.

14. Anlage zur Gewinnung von Reinhelium mit einer ersten Membrantrennstufe (1), einer zweiten Membrantrennstufe (2) und einer dritten Membrantrennstufe (3), wobei Mittel vorgesehen sind, die dafür eingerichtet sind, der ersten Membrantrennstufe (1) ein erstes heliumhaltiges Einsatzgemisch, der zweiten Membrantrennstufe (2) ein zweites heliumhaltiges Einsatzgemisch und der dritten Membrantrennstufe (3) ein drittes heliumhaltiges Einsatzgemisch zuzuführen, wobei die erste Membrantrennstufe (1) dafür eingerichtet ist, ein erstes Permeat und ein erstes Retentat zu bilden, wobei die zweite Membrantrennstufe (2) dafür eingerichtet ist, ein zweites Permeat und ein zweites Retentat zu bilden, und wobei die dritte Membrantrennstufe (3) dafür eingerichtet ist, ein drittes Permeat und ein drittes Retentat zu bilden, **gekennzeichnet durch** Mittel, die dafür eingerichtet sind, das erste Einsatzgemisch unter Verwendung zumindest eines Teils eines Helium enthaltenden Ausgangsgemischs zu bilden, das zweite Einsatzgemisch unter Verwendung zumindest eines Teils des ersten Permeats zu bilden, das dritte Einsatzgemisch unter Verwendung zumindest eines Teils des zweiten Permeats zu bilden, das dritte Permeat zumindest teilweise unter Erhalt des Reinheliums und eines Restgemischs durch Druckwechseladsorption zu bearbeiten, und zumindest einen Teil des Restgemischs bei der Bildung des zweiten oder des dritten Einsatzgemischs zu verwenden.

15. Anlage nach Anspruch 14, die zur Durchführung eines Verfahrens nach einem der Ansprüche 1 bis 13 eingerichtet ist.
